# EUROPÄISCHE PATENTSCHRIFT

(11) **EP 3 429 734 B1**
(45) Veröffentlichungstag und Bekanntmachung des Hinweises auf die Patenterteilung: **12.02.2020**
(21) Anmeldenummer: 17712413.8
(22) Anmeldetag: 14.03.2017
(51) Int. Cl.: B01F 3/20, B01F 5/10, C09B 67/46, B01F 13/10

(54) **VERFAHREN ZUR HERSTELLUNG VON DISPERSIONEN MIT DEFINIERTER PARTIKELGRÖSSE**
METHOD FOR PRODUCING DISPERSIONS WITH DEFINED PARTICLE SIZE
PROCÉDÉ POUR LA PRODUCTION DE DISPERSIONS À GRANULOMÉTRIE DÉFINIE

(30) Priorität: 15.03.2016 CH 3452016
(43) Veröffentlichungstag der Anmeldung: 23.01.2019
(73) Patentinhaber: ARCOLOR AG, CH-9104 Waldstatt (CH)
(72) Erfinder: OURIEV, Boris, 9200 Gossau / SG (CH)
(74) Vertreter: Kaminski Harmann Patentanwälte AG (Schweiz)
(86) Internationale Anmeldenummer: PCT/EP2017/025049
(87) Internationale Veröffentlichungsnummer: WO 2017/157534

(56) Entgegenhaltungen:
- CA-A1- 2 227 667
- DE-A1-102006 028 590
- FR-A1- 3 001 910

## Beschreibung

Die vorliegende Erfindung betrifft ein Verfahren zur Herstellung von Dispersionen mit definierter Partikelgrösse, wobei eine flüssige Mischdispersion kontinuierlich in eine Grobanteildispersion und in eine Feinanteildispersion getrennt wird.

Bei der Herstellung von Dispersionen, in denen Feststoffpartikel (disperse Phase) in einem flüssigen Dispersionsmedium (kontinuierliche Phase) verteilt sind, entsteht in der Regel zunächst eine Mischung von Feststoffpartikeln mit unterschiedlichen Partikelgrössen.

Für bestimmte Anwendungen ist es jedoch erforderlich, dass die disperse Phase Feststoffpartikel mit einer ungefähr konstanten Teilchengrösse aufweist sowie dass eine maximale Teilchengrösse nicht überschritten wird. So ist es für die Qualität von Dispersionsfarben entscheidend, dass die Farbpigmente der dispersen Phase eine bestimmte Teilchengrösse aufweisen. Beispielsweise sind bei Metalleffektpigmenten, wie Pigmenten aus Aluminium, Eisen, Kupfer und deren Legierungen, das Erscheinungsbild der Pigmente und die Farbtiefe von der Teilchengrösse abhängig. Grobe Partikel schaffen einen glitzernden Eindruck und feine Partikel erzeugen bei Änderung des Betrachtungswinkels einen weichen Übergang.

Bei Druckfarben und Tinten auf Pigmentbasis, die im Drucksystem durch Kanäle und Druckdüsen fliessen, dürfen die einzelnen Farbpigmente keinesfalls die maximal zulässige Teilchengrösse überschreiten, da ansonsten insbesondere die Düsen des Drucksystems verstopfen. Die Teilchengrösse hat auch Einfluss auf die Pigmentdispersionsstabilität, die während der Gebrauchsdauer der Druckfarben kritisch ist. Denn die Brown'sche-Bewegung kleinster Teilchen hilft zu verhindern, dass sich die Pigmente absetzen, was ebenfalls zu einer sukzessiven Verstopfung der Kanäle und Düsen des Drucksystems führen kann.

Aufgrund mitunter sehr hoher Folgekosten derartiger Verstopfungen im Drucksystem, sind die Hersteller von Druckfarben auf Pigmentbasis angehalten, eine bestimmte Qualität der dispersen Phase hinsichtlich der Teilchengrösse garantieren zu können.

Bei Dispersionsfarben ist es für den Herstellungsprozess charakteristisch, dass in der dispersen Phase eine bimodale Partikelgrössenverteilung erzeugt wird, also dass die Häufigkeitsverteilung der Teilchengrössen zwei Maxima aufweist, ein Maximum für grobe Partikel und ein Maximum für feine Partikel. Die bimodale Grössenverteilung kann sowohl symmetrisch als auch asymmetrisch sein.

Die vom Anwender der Dispersionsfarben bzw. vom Kunden festzulegende, maximal zulässige Teilchengrösse, die in der herzustellenden Feinanteildispersion enthalten sein darf, sollte einem Schwellenwert entsprechen, der in dem Minimum zwischen den beiden Maxima der bimodalen Grössenverteilung liegt.

Um bei der Herstellung zu gewährleisten, dass kein Partikel der dispersen Phase die maximal zulässige Teilchengrösse überschreitet, ist eine Filterung der Dispersion die sicherste Methode. Um die Kosten der Filterung zu verringern, sollte die bimodale Partikelgrössenverteilung in der zu filternden Dispersion weitestgehend abgebaut, also die bimodale Grössenverteilung derart asymmetrisch sein, dass das Maximum für feine Partikel das Maximum für grobe Partikel um ein Vielfaches übersteigt. Ziel bei der Herstellung der Feinanteildispersion ist eine Phasenverschiebung zu einer monomodalen Partikelgrössenverteilung, also dass die Grössenverteilung lediglich ein Maximum an feinen Partikeln aufweist. Die Anzahl der im Filter verbleibenden Partikel und somit die Kosten der Filterung sind umso geringer, je stärker die Phasenverschiebung zugunsten des Anteils an feinen Partikeln noch vor dem Filterungsprozess erfolgt.

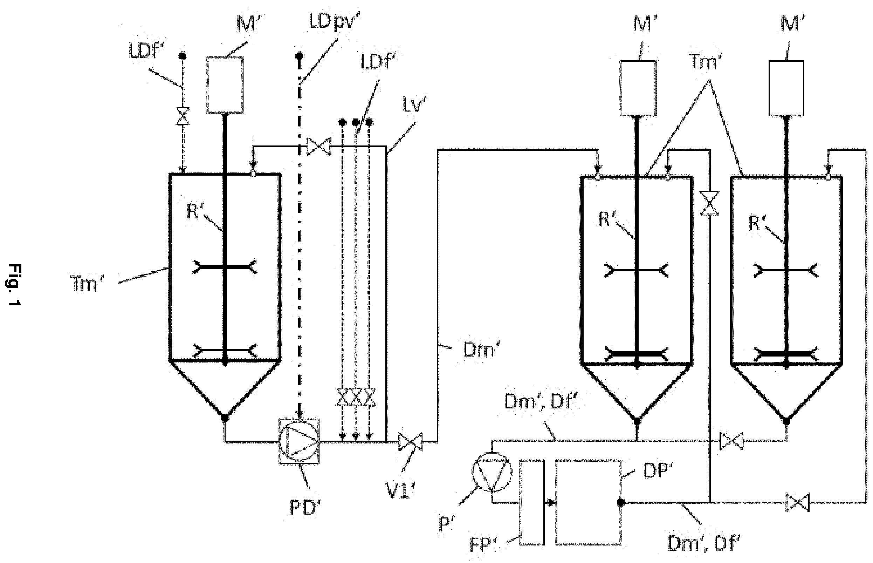

Bei einem herkömmlichen Herstellungsverfahren werden die Farbpigmente der dispersen Phase mit Lösungsmittel der kontinuierliche Phase vermischt und in dem Disperger bzw. in der Rührwerkskugelmühle zerkleinert (siehe Figur 1 und Figurenbeschreibung weiter unten). Da das Zermahlen der Farbpigmente der dispersen Phase in der Rührwerkskugelmühle keine einheitliche Teilchengrösse der Farbpigmente erzeugt, sondern eine wie oben beschriebene bimodale Partikelgrössenverteilung, ist zur Gewährleistung eines bestimmten Schwellenwerts der Teilchengrössen die Trennung des Partikelgrössengemisches in einen Grobanteil und in einen Feinanteil erforderlich. Um eine Phasenverschiebung in Richtung des Feinanteils zu erreichen, muss der im Batch- bzw. Chargen-Verfahren betriebene Prozess mehrmals wiederholt werden. Dabei wird die gesamte Charge mehrmals durch die Rührwerkskugelmühle geleitet, obwohl ein zunehmender Feinanteil in der Charge schon hinreichend zerkleinert und dispergiert wurde. Dies ist prozesstechnisch und energetisch ineffizient und führt dazu, dass die gesamte Anlage immer überdimensioniert sein muss.

In anderen Herstellungsverfahren werden zur Trennung des Partikelgemisches ausschliesslich Filtervorrichtungen eingesetzt. So wird in der Offenlegungsschrift DE 33 42 689 A1 eine Filtervorrichtung zum Entfernen von Verunreinigungen aus Flüssigkeiten, insbesondere aus Dispersionsfarben, offenbart. Die Kosten eines Trennverfahrens von Dispersionen nur mit Filtern werden noch erhöht, wenn für eine kontinuierliche Verfahrensweise zwei Filtervorrichtungen parallel geschaltet werden müssen. Zudem funktionieren Filter bei besonders kleinen Partikelgrössen nicht mehr.

Kostengünstiger ist es, das Partikelgemisch der dispersen Phase durch die Wirkung von Zentrifugalkräften kontinuierlich zu trennen. Die Offenlegungsschrift DE 24 26 908 A1 offenbart eine zentrifugale Teilchen-Elutrationsvorrichtung und ein Verfahren zu deren Verwendung. Die Elutration wird zum Trennen von Teilchen mit gleichen Dichten und unterschiedlichen effektiven Durchmessern verwendet, bei der sich der schneller absetzende Teil der Teilchen in Zentrifugalrichtung und die sich langsamer absetzenden Teilchen in Zentripetalrichtung bewegen. Das Verfahren basiert allgemein auf einer Anwendung des Gesetzes von Stokes, nach dem Teilchen mit unterschiedlicher Grösse das Bestreben haben, sich mit unterschiedlichen Geschwindigkeiten gegen die Zentrifugalgrenze hin abzusetzen.

CA2227667 offenbart ein Verfahren zur Herstellung von Dispersionen mit einer Rückführung der abermals zermahlenen Teilchen in den Vorratstank.

FR 3001910 offenbart ein Verfahren zur Herstellung von Dispersionen mit einer Rückführung der abermals zermahlenen Teilchen in die Trennvorrichtung.

Aufgabe der vorliegenden Erfindung ist es, das oben genannte Herstellungsverfahren (siehe Figur 1) dahingehend weiterzuentwickeln, dass zur Herstellung der gleichen Produktmenge an Feinanteildispersion im Vergleich zum bekannten Herstellungsverfahren die Anlage kleiner und effizienter ausgelegt werden kann, also in der Anschaffung und im Betrieb kostengünstiger ist.

Diese Aufgabe wird durch die Merkmale des Patentanspruchs 1 gelöst.

Das neue Verfahren zur Herstellung von Dispersionen mit definierter Partikelgrösse, wobei eine flüssige Mischdispersion kontinuierlich in eine Grobanteildispersion und in eine Feinanteildispersion getrennt wird, weist folgende Schritte auf:
A) kontinuierliches oder diskontinuierliches Herstellen der Mischdispersion in einem Vordispersionsprozess, in dem ein Partikelgemisch einer dispersen Phase mit einer flüssigen kontinuierlichen Phase zur Mischdispersion vermischt und in zumindest einem Mischtank zwischengelagert wird,
B) Einleiten der Mischdispersion aus dem Vordispersionsprozess in zumindest eine kontinuierlich arbeitende Trennvorrichtung,
C) Trennen des Partikelgemisches der Mischdispersion in der zumindest einen Trennvorrichtung in grobe Partikel der Grobanteildispersion und in feine Partikel der Feinanteildispersion, entsprechend eines Schwellenwerts für die Partikelgrösse,
D) Ableiten der Feinanteildispersion aus der zumindest einen Trennvorrichtung in zumindest einen Vorratstank,
E) Ableiten der Grobanteildispersion aus der zumindest einen Trennvorrichtung in zumindest einen Disperger,
F) Zermahlen der groben Partikel der Grobanteildispersion im zumindest einen Disperger in ein dispergiertes Partikelgemisch und Zurückleiten des dispergierten Partikelgemisches in den zumindest einen Mischtank in den Vordispersionsprozess sowie
G) Vermischen des in den Vordispersionsprozess zurückgeleiteten dispergierten Partikelgemisches mit der im Vordispersionsprozess hergestellten Mischdispersion in dem zumindest einen Mischtank.

Da bereits nach einem nur einmaligen Durchlaufen der Verfahrensschritte A bis C die bimodale Partikelgrössenverteilung der Mischdispersion in die Grobanteildispersion und in die Feinanteildispersion aufgetrennt und die Feinanteildispersion nicht in den Kreislauf der Grobanteildispersion zurückgeführt, sondern mit Schritt D in den Vorratstank separiert wird, kommt es nicht zu der eingangs beschriebenen sukzessiven Phasenverschiebung in der Mischdispersion. Die Feinanteildispersion, deren feine Partikel dem Schwellenwert für die Partikelgrösse entsprechen, wird nicht noch einmal die Schritte A bis C durchlaufen, was dazu führt, dass die Anlage im Vergleich zum Stand der Technik (siehe Figur 1) kleiner und effizienter ausgelegt werden kann.

Dadurch wird vorteilhafterweise nur die Grobanteildispersion in den Disperger geführt, um die groben Partikel der Grobanteildispersion zu zermahlen und das dabei entstehende dispergierte Partikelgemisch zurück in den Vordispersionsprozess zu führen, damit dieses mit der Mischdispersion, die im Schritt A aus der dispersen Phase und der flüssigen kontinuierlichen Phase erzeugt wird, im Mischtank vermischt werden kann.

Bei dieser Rezirkulation des dispergierten Partikelgemisches in den Vordispersionsprozess werden den Partikeln des Partikelgemisches der aus der dispersen Phase und der flüssigen kontinuierlichen Phase erzeugten ursprünglichen Mischdispersion die Partikel des dispergierten Partikelgemisches beigemischt.

Ein in dieser Anmeldung und insbesondere in den Patentansprüchen mit dem Bezugszeichen Pm bezeichnetes Partikelgemisch kann somit auch Partikel des mit dem Bezugszeichen PDm bezeichneten dispergierten Partikelgemisches enthalten. Zudem steht das Bezugszeichen PDm auch für eine flüssige Dispersion, in der das dispergierte Partikelgemisch aufgelöst ist.

Vorteilhafte Weiterbildungen der Erfindung sind in den abhängigen Ansprüchen angegeben.

Die Verfahrensschritte des Patentanspruchs 1 werden so lange wiederholt, bis die Mischdispersion im Mischtank oder die Feinanteildispersion im Vorratstank eine bestimmte Füllmenge überschritten hat, oder, wenn jeweils mehrere Misch- und Vorratstanks eingesetzt werden, bis die Mischdispersion in allen der jeweiligen Tanks eine bestimmte Füllmenge überschritten hat. Diese Füllmengen eignen sich besonders als Regelparameter für den Herstellungsprozess. So wird der Prozess gestoppt, wenn der Mischtank bzw. alle Mischtanks mit Mischdispersion gefüllt oder wenn der Vorratstank bzw. alle Vorratstanks mit Feinanteildispersion gefüllt sind.

Sobald die Mischdispersion im Mischtank eine bestimmte Mindestfüllmenge unterschritten hat, wird der Verfahrensschritt A zur Herstellung der Mischdispersion bei kontinuierlicher Herstellung intensiviert oder bei diskontinuierlicher Herstellung öfters wiederholt. Intensiviert bedeutet hier, die Erhöhung der Einbringmengen des Partikelgemisches der dispersen Phase und der flüssigen kontinuierlichen Phase, die im Vordispersionsprozess zur Mischdispersion vermischt werden. Bei diskontinuierlicher Herstellung kann die Ausbringungsmenge an Mischdispersion durch kürzere Unterbrechungsintervalle oder mit einem Übergang zur kontinuierlichen Produktion erreicht werden. Dadurch steigt die Füllmenge des Mischtanks wieder an, maximal bis zum Überschreiten einer obersten Füllgrenze.

In einer besonders bevorzugten Ausführungsform der Erfindung ist die zu trennende Mischdispersion eine Farbdispersion mit Anteilen von groben und feinen Farbpigmenten. Mit dem in Figur 1 gezeigten Stand der Technik werden beim Anmelder vor allem Farbdispersionen produziert. Das neue Verfahren wurde für eine prozesstechnisch und energetisch effizientere Herstellung von Druckfarben auf Pigmentbasis entwickelt, bei denen eine bestimmte Teilchengrösse der Farbpigmente garantiert werden kann.

Allerdings eignet sich das Verfahren ebenso zur kontinuierlichen Trennung anderer flüssiger Mischdispersionen in eine Grobanteil- und in eine Feinanteildispersion, wie beispielsweise für alle Arten von Suspensionen in der chemischen Verfahrenstechnologie sowie in der Lebensmitteltechnologie.

Das erfindungsgemässe Verfahren eignet sich besonders für flüssige Dispersionen mit Partikelgemischen in der dispersen Phase, in denen die Partikelgrösse der groben Partikel im Bereich von 0,5 Mikrometer bis 1000 Mikrometer liegt und die Partikelgrösse der feinen Partikel im Bereich von 0,01 Mikrometer bis 100 Mikrometer. Darüber hinaus eignet sich das Verfahren auch für zu trennende Partikelgrössen von 0,1 bis 1000 Mikrometer. Mit dem Disperger können Partikelgrössen von nur 0,5 Mikrometer erzeugt werden, so dass die Trennvorrichtung auch zur Klassifizierung derartig kleiner Partikel bzw. Teilchengrössen geeignet sein sollte.

Bei den Teilchengrössen- bzw. Partikelgrössenangaben handelt es sich hier immer um einen Äquivalentdurchmesser der Partikel, der ein Mass für die Grösse eines unregelmässig geformten Partikels ist, wie beispielsweise ein Sandkorn oder ein Farbpigment. Der Äquivalentdurchmesser berechnet sich aus dem Vergleich einer Eigenschaft des unregelmässigen Teilchens mit einer Eigenschaft eines regelmässig geformten Teilchens.

Vorzugsweise wird durch zumindest einen Partikelfilter sichergestellt, dass die Partikel des Partikelgemisches der im Vordispersionsprozess hergestellten Mischdispersion, die eine bestimmte maximale Partikelgrösse überschreiten, nicht in die Trennvorrichtung eingeleitet werden. Mindestens ein solcher Partikelfilter ist vorteilhaft im Verlauf der Zuleitung in die Trennvorrichtung angeordnet, um die zu grossen Partikel vor der Trennvorrichtung herauszufiltern.

Dieser Filter wäre nicht erforderlich, wenn die Partikel des Partikelgemisches der dispersen Phase, die im Verfahrensschritt A in den Herstellungsprozess erstmals von Extern, z.B. von einem Lieferanten für Farbpigmente, eingebracht werden, diese bestimmte maximale Partikelgrösse nicht überschreiten würden. Zusätzlich sichert der Filter insbesondere die Trennvorrichtung vor zu grossen Teilen, die fehlerhaft sonst wie in den Prozess eingedrungen sind.

Durch zumindest einen weiteren Partikelfilter wird sichergestellt, dass die feinen Partikel der Feinanteildispersion, deren Partikelgrössen den Schwellenwert für die Partikelgrösse überschreiten, nicht in den Vorratstank eingeleitet werden. Mindestens ein solcher Partikelfilter ist vorteilhaft im Verlauf der Feinanteilleitung in den Vorratstank angeordnet, um eine reine Feinanteildispersion im Vorratstank zu garantieren.

Der Schwellenwert für die Partikelgrösse liegt im Minimum zwischen den beiden Maxima der bimodalen Grössenverteilung. Die bimodale Partikelgrössenverteilung wird durch die Grösse der Partikel im Partikelgemisch der dispersen Phase sowie durch die Art und Weise der Zerkleinerung bzw. des Zermahlens der groben Partikel der Grobanteildispersion im Disperger bestimmt.

Das im Vordispersionsprozess eingebrachte Partikelgemisch der dispersen Phase kann insbesondere in Pulverform bei externen Lieferanten bezogen werden, die dieses beispielsweise durch Zermahlen in herkömmlichen Rührwerkskugelmühlen erzeugen.

Erfahrungsgemäss liegt nach einem ersten Durchlaufen des Verfahrensschrittes A eine asymmetrisch bimodale Grössenverteilung vor, bei der das Maximum für feine Partikel auf einem höheren Niveau als das Maximum für grobe Partikel liegt, also bei der bereits der Anteil an Feinanteildispersion höher als der der Grobanteildispersion ist.

Als Grenzwert für das Trennverfahren (Schritt C) wird der Schwellenwert für die Partikelgrösse festgelegt. Partikel mit einem Äquivalentdurchmesser bis zu diesem Schwellenwert werden aus der Mischdispersion in die Feinanteildispersion getrennt und grössere Partikel in die Grobanteildispersion.

Da diese Klassifizierung in der Trennvorrichtung nicht mit einer hinreichenden Genauigkeit erfolgt, ist eine Filterung der Feinanteildispersion (wie oben beschrieben) erforderlich.

Entsprechend der oben festgelegten Bereiche zu den Partikelgrössen der feinen und der groben Partikel eignet sich das erfindungsgemässe Verfahren besonders für Schwellenwerte von 0,01 bis 1000 Mikrometer.

Zur Erzielung eines regelbaren Kreislaufflusses der Dispersionen in der Herstellungsanlage wird der Kreislauffluss mit zumindest einer Pumpe aufrechterhalten. Vorteilhaft ist mindestens eine Pumpe im Verlauf der Zuleitung in die Trennvorrichtung angeordnet. Durch Positionierung der Anlagenkomponenten Mischtank, Trennvorrichtung, Disperger und Vorratstank auf unterschiedlichen Höhenniveaus wäre durch das Wirken der Gravitationskraft auf die Dispersionen, verstärkt durch die Vorschubkräfte von Trennvorrichtung und Disperger, auch eine Aufrechterhaltung des Herstellprozesses ohne Pumpe möglich. Jedoch erhöht sich der Druck in den Dispersionsleitungen durch den Einsatz von Pumpen und somit die Regelbarkeit des gesamten Prozesses. So können die Strömungsgeschwindigkeiten der Dispersionen im Zusammenspiel von Pumpendruck und Drosselventilen gesteuert werden.

Zur weiteren Ausgestaltung der Erfindung sind mittels einer Steuervorrichtung die Anlagenkomponenten, wie die zumindest eine Dosierpumpe, die zumindest eine Pumpe, der jeweils zumindest eine Partikelfilter, die zumindest eine Trennvorrichtung, der zumindest eine Disperger, der zumindest eine Antriebsmotor und die Ventile, ansteuerbar sowie die Strömungsgeschwindigkeiten der Dispersionen entsprechend der Füllmengen im zumindest einen Mischtank und im zumindest einen Vorratstank änderbar. Durch den Einsatz einer SPS-Steuerung können alle ansteuerbaren Anlagenkomponenten auf das jeweils gewünschte Produktionsprogramm eingestellt werden.

Dabei beschränken sich die Anlagenkomponenten nicht auf die oben genannten, so dass auch weitere Komponenten zum Einsatz kommen und angesteuert werden können, wie Messgeräte, z.B. Rheometer sowie Geräte zur Laserbeugungs-Partikelgrößenanalyse und zur Echtzeitmessung farbmetrischen Eigenschaften.

Weitere Einzelheiten, Merkmale und Vorteile des Gegenstandes der Erfindung ergeben sich aus der nachfolgenden Beschreibung der zugehörigen Figuren, in denen beispielhaft bevorzugte Ausführungsbeispiele der Erfindung dargestellt sind. Die der Beschreibung und den Zeichnungen zu entnehmenden Merkmale können einzeln für sich oder zu mehreren in beliebiger Kombination erfindungsgemäss angewandt werden.

Die Erfindung wird anhand von Ausführungsbeispielen, welche in den Zeichnungen dargestellt sind, näher erläutert.

In den Zeichnungen zeigen:
Figur 1 ein Blockschaltbild eines Herstellungsverfahrens für Dispersionsfarben nach dem Stand der Technik und
Figur 2 ein Blockschaltbild eines erfindungsgemässen Verfahrens zur kontinuierlichen Trennung einer flüssigen Mischdispersion in eine Grobanteildispersion und in eine Feinanteildispersion, insbesondere zur Herstellung von Dispersionsfarben.

Im bekannten Herstellungsverfahren nach Figur 1 werden insbesondere Farbpigmente in Pulverform, z.B. bei einem Lieferanten von Farbpigmenten eingekauft, zusammen mit Lösungsmittel in einen Vordispersions-Kreislaufprozess eingebracht. Die Einbringung der Farbpigmente (disperse Phase) in den Vordispersionsprozess erfolgt über eine Dosierlinie für Pulver unter Vakuum LDpv'. Diese Vakuum-Dosierlinie LDpv' bringt das Farbpigment-Pulver in eine Dosierpumpe PD' ein, in der das Pulver mit dem Lösungsmittel (kontinuierliche Phase) vermischt wird. Die Einbringung der Farbpigmente der dispersen Phase in den Vordispersionsprozess kann jedoch auch anderweitig erfolgen, wie direkt in einen Mischtank Tm'. Das Lösungsmittel der kontinuierlichen Phase wird über Dosierlinien für flüssige Komponenten LDf' in den Vordispersionsprozess eingeleitet, z.B. in eine Vordispersionsleitung Lv' oder in den Mischtank Tm'.

Im Vordispersions-Kreislaufprozess erfolgt die Vermischung der Farbpigmente mit Lösungsmittel zu einer Mischdispersion Dm'. Solange ein Ventil V1' geschlossen ist, zirkuliert die Mischdispersion Dm' durch die Vordispersionsleitung Lv', den Mischtank Tm' und die Dosierpumpe PD', deren Pumpendruck den Kreislauf aufrechterhält. Der Mischtank Tm' ist zur Vermischung der Mischdispersion Dm' mit einem Rührwerk R' versehen, angetrieben durch einen Antriebsmotor M'.

Der Kreislauf kann doch Ausschalten der Dosierpumpe PD' gestoppt werden, so dass die Mischdispersion Dm' im Mischtank Tm' gelagert und bei Bedarf weiterhin mit dem Rührwerk R' durchmischt wird. Für einen diskontinuierlichen Betrieb der Vordispersion ist es vorteilhaft, wenn der Mischtank Tm', in dem die Mischdispersion Dm' zur weiteren Verarbeitung zwischengespeichert wird, ein ausreichend grosses Speichervolumen aufweist.

Bei Öffnung des Ventils V1' gelangt die Mischdispersion Dm' in einen Chargen-Dispersationsprozess nach dem Stand der Technik. Dabei werden die in der Mischdispersion Dm' enthaltenen Farbpigmente in einem Disperger DP', der beispielsweise wie eine Rührwerkskugelmühle funktioniert, zermahlen.

Durch den Einsatz von zwei Mischtanks Tm' kann der Chargen-Dispersationsprozess kontinuierlich betrieben werden. Auch wenn eine Charge in einem der Mischtanks Tm' fertiggestellt ist und aus dem Mischtank Tm' in einen Lagertank (nicht dargestellt) abgeleitet werden soll, kann die Rührwerkskugelmühle DP' weiterlaufen, da die nächste Charge im zweiten Mischtank Tm' erzeugt wird. Die zwei Mischtanks Tm' können auch als Pendeltanks ausgeführt sein.

Vor der Rührwerkskugelmühle DP' ist eine Pumpe P' und ein Partikelfilter FP' geschaltet. Die Pumpe P' erzeugt den Pumpendruck, um die Mischdispersion Dm' durch den Partikelfilter FP' und die Rührwerkskugelmühle DP' in einen der Mischtanks Tm' zu fördern.

Die Farbpigmente weisen nach dem Prozess des Zermahlens in der Rührwerkskugelmühle DP' keine einheitliche Teilchengrösse auf. Nach einem ersten Durchlauf der Farbpigmente und des Lösungsmittels durch die Rührwerkskugelmühle DP' liegt in der Farbdispersion bzw. Mischdispersion Dm' erfahrungsgemäss eine asymmetrisch bimodale Partikelgrössenverteilung vor, bei der das Maximum für feine Partikel auf einem höheren Niveau als das Maximum für grobe Partikel liegt. Um eine Phasenverschiebung noch stärker in Richtung eines Feinanteils zu erreichen, muss der im Chargen-Verfahren betriebene Prozess mehrmals wiederholt werden. Dabei wird eine gesamte Charge mehrmals durch die Rührwerkskugelmühle DP' geleitet, obwohl ein zunehmender Feinanteil in der Charge schon hinreichend zerkleinert und dispergiert wurde. Ist nach einem mehrmaligen Durchlaufen des Prozesses eine Phasenverschiebung zu einer möglichst monomodalen Partikelgrössenverteilung erreicht, bei der die Grössenverteilung lediglich ein Maximum an feinen Partikeln aufweist, wird der Mischtank Tm' mit der fertigen Charge mit dem zweiten Mischtank Tm' ausgetauscht, um in diesem eine neue Charge zu erzeugen.

Eine so erzeugte Feinanteildispersion Df', die sich in dem Mischtank Tm' befindet, der aus dem Prozesskreislauf entnommenen wurde, kann nun in einen Lagertank abgeleitet werden. Währenddessen wird in dem in den Prozesskreislauf neu eingeschalteten Mischtank Tm' eine neue Charge an Farb- bzw. Mischdispersion Dm' solange bearbeitet, bis wiederum die nahezu reine Feinanteildispersion Df' entstanden ist. Bevor die Feinanteildispersion Df' aus dem jeweiligen Mischtank Tm' in einen Lagertank abgeleitet wird, durchläuft sie einen Partikelfilter (nicht dargestellt).

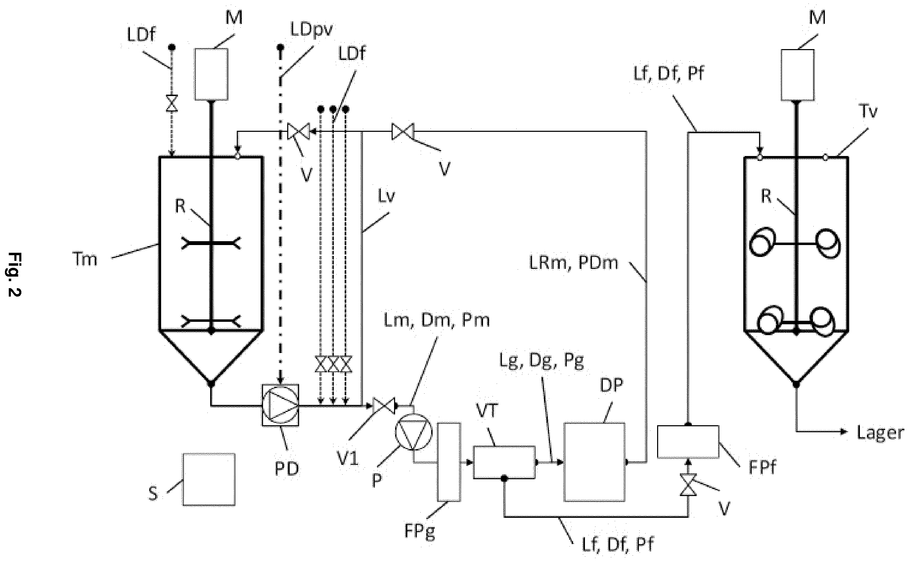

Der Vordispersionsprozess des erfindungsgemässen Herstellungsverfahrens nach Figur 2 unterscheidet sich von dem des Standes der Technik in Figur 1 insoweit, dass ein dispergiertes Partikelgemisch PDm aus dem Hauptdispersionsprozess in den Vordispersionsprozess zurückgeführt wird.

Der Hauptdispersionsprozess des Herstellungsverfahrens nach Figur 2 unterscheidet sich vom Stand der Technik in Figur 1 insbesondere dadurch, dass erfindungsgemäss eine kontinuierlich arbeitende Trennvorrichtung VT vor einem Disperger DP geschaltet ist.

Bei Öffnung eines Ventils V1 wird eine Mischdispersion Dm, in der zusätzlich zu einem Partikelgemisch Pm das aus dem Hauptdispersionsprozess rezirkulierte Partikelgemisch PDm eingemischt ist, nicht wie in Figur 1 bekannt direkt in den Disperger DP geleitet, sondern in die Trennvorrichtung VT. Dies erfolgt über eine Zuleitung Lm, in deren Verlauf eine Pumpe P und ein Partikelfilter FPg angeordnet sind.

In der Trennvorrichtung VT wird das in der Mischdispersion Dm enthaltene Partikelgemisch Pm (das auch Partikel des dispergierten Partikelgemisches PDm enthält) separiert, nämlich in grobe Partikel Pg einer Grobanteildispersion Dg und in feine Partikel Pf einer Feinanteildispersion Df. Die Trennvorrichtung VT ist so ausgelegt, dass nur solche feinen Partikel Pf in die Feinanteildispersion Df getrennt werden, die einen vom Kunden gewünschten Schwellenwert für die Partikelgrösse nicht überschreiten.

Da in der Trennvorrichtung VT das Einhalten eines solchen Grenzwertes für Äquivalentdurchmesser der Partikel nicht mit Sicherheit zu gewährleisten ist, muss die Feinanteildispersion Df gefiltert werden. Ein Partikelfilter FPf ist in einer Feinanteilleitung Lf nach dem Austritt aus der Trennvorrichtung VT angeordnet, so dass die Feinanteildispersion Df, die durch die Feinanteilleitung Lf und den Partikelfilter FPf in einen Vorratstank Tv fliesst, hinsichtlich der Partikelgrössen die vom Kunden gestellten Qualitätsanforderungen erfüllt.

Dabei ist die Feinanteildispersion Df die Dispersion, aus der das Endprodukt bzw. die Dispersionsfarbe für den Kunden erzeugt wird.

Zudem werden vor dem Einleiten der Mischdispersion Dm in die Trennvorrichtung VT durch den Partikelfilter FPg alle Partikel des in der Mischdispersion Dm enthaltenen Partikelgemisches Pm (das auch Partikel des dispergierten Partikelgemisches PDm enthält) ausgefiltert, welche eine bestimmte maximale Partikelgrösse überschreiten.

Mit der Pumpe P wird der Fluss der Dispersionen Dm, Dg, Df, PDm im Hauptdispersionsprozess aufrechterhalten. Die Pumpe P erzeugt genügend Förderdruck, um die Mischdispersion Dm durch die Zuleitung Lm und den Partikelfilter FPg in die Trennvorrichtung VT zu leiten, und weiter die in der Trennvorrichtung VT aus der Mischdispersion Dm separierten Grobanteil- Dg und Feinanteildispersionen Df einerseits durch eine Grobanteilleitung Lg in den Disperger DP und andererseits durch die Feinanteilleitung Lf und den Partikelfilter FPf in den Vorratstank Tv.

Die groben Partikel Pg der Grobanteildispersion Dg werden im Disperger DP zermahlen. Dabei entsteht das dispergierte Partikelgemisch PDm, das durch den Förderdruck in einer Rückleitung LRm zurück in den Vordispersionsprozess geleitet wird, um dieses mit der Mischdispersion Dm, die im Verfahrensschritt A aus der dispersen und der kontinuierlichen Phase erzeugt wird, im Mischtank Tm zu vermischten.

Durch Änderung des Förderdrucks, über die Laufgeschwindigkeit der Pumpe P und/oder Drosselventile, wie das Ventil V1, können die Strömungsgeschwindigkeiten der Dispersionen Dm, Dg, Df, PDm geregelt werden.

Neben den in der Figur dargestellten Ventile V, V1 können in der gesamten Herstellungsanlage weitere Absperr- und Regeleinrichtungen angeordnet werden.

Sowohl der Mischtank Tm als auch der Vorratstank Tv weisen jeweils ein durch einen Antriebsmotor M angetriebenes Rührwerk R auf, wobei die Rührwerke R vorteilhafterweise unterschiedlich ausgelegt sind, entsprechend der aktiven Vermischfunktion im Mischtank Tm und der Aufrechterhaltungsfunktion der Vermischung im Vorratstank Tv.

Im erfindungsgemässen Herstellungsverfahren können auch mehrere der jeweiligen Anlagenkomponenten, wie Pumpe PD, P, Partikelfilter FPg, FPf, Trennvorrichtung VT, Disperger DP, Mischtank Tm, Vorratstank Tv, Rührwerk R, Antriebsmotor M, Leitung Lv, Lm, Lf, Lg, LRm und Ventile V, V1, parallel zueinander geschaltet sein und gleichzeitig oder abwechselnd arbeiten. Dies ermöglicht u.a. einen höheren Durchsatz sowie die Reinigung oder Wartung der jeweils weiteren zweiten oder dritten Komponenten auch während des Betriebs der Anlage.

Mittels einer Steuervorrichtung S besteht die Möglichkeit, Anlagenkomponenten, wie PD, P, FPg, FPf, VT, DP, M V, V1, aufeinander abzustimmen sowie Strömungsgeschwindigkeiten der Dispersionen Dm, Dg, Df, PDm entsprechend der Füllmengen im Mischtank Tm und im Vorratstank Tv zu regeln. Dabei müssen nicht alle oben aufgezählten Anlagenkomponenten angesteuert werden. Allerdings können weitere, hier nicht aufgezählte Anlagenkomponenten, in die Steuervorrichtung für die Produktionsanlage eingebunden werden, die beispielsweise eine speicherprogrammierbare Steuerung ist.

### Bezugszeichenliste

- LDpv', LDpv:: Dosierlinie für Pulver unter Vakuum
- PD', PD:: Dosierpumpe
- Tm', Tm:: Mischtank
- LDf', LDf:: Dosierlinien für flüssige Komponenten
- Lv', Lv:: Vordispersionsleitung
- Dm', Dm:: Mischdispersion
- V1', V1, V:: Ventile
- R', R:: Rührwerk
- M', M:: Antriebsmotor
- DP', DP:: Disperger
- P', P:: Pumpe
- FP', FPg, FPf:: Partikelfilter
- Df', Df:: Feinanteildispersion
- PDm:: dispergiertes Partikelgemisch
- VT:: Trennvorrichtung
- Pm:: Partikelgemisch
- Lm:: Zuleitung
- Pg:: grobe Partikel
- Dg:: Grobanteildispersion
- Pf:: feine Partikel
- Lf:: Feinanteilleitung
- Tv:: Vorratstank
- Lg:: Grobanteilleitung
- LRm:: Rückleitung
- S:: Steuervorrichtung

## Patentansprüche

1. Verfahren zur Herstellung von Dispersionen mit definierter Partikelgrösse, wobei eine flüssige Mischdispersion (Dm) kontinuierlich in eine Grobanteildispersion (Dg) und in eine Feinanteildispersion (Df) getrennt wird, welches folgende Schritte aufweist:
A) kontinuierliches oder diskontinuierliches Herstellen der Mischdispersion (Dm) in einem Vordispersionsprozess, in dem ein Partikelgemisch (Pm) einer dispersen Phase mit einer flüssigen kontinuierlichen Phase zur Mischdispersion (Dm) vermischt und in zumindest einem Mischtank (Tm) zwischengelagert wird,
B) Einleiten der Mischdispersion (Dm) aus dem Vordispersionsprozess in zumindest eine kontinuierlich arbeitende Trennvorrichtung (VT),
C) Trennen des Partikelgemisches (Pm) der Mischdispersion (Dm) in der zumindest einen Trennvorrichtung (VT) in grobe Partikel (Pg) der Grobanteildispersion (Dg) und in feine Partikel (Pf) der Feinanteildispersion (Df), entsprechend eines Schwellenwerts für die Partikelgrösse,
D) Ableiten der Feinanteildispersion (Df) aus der zumindest einen Trennvorrichtung (VT) in zumindest einen Vorratstank (Tv),
E) Ableiten der Grobanteildispersion (Dg) aus der zumindest einen Trennvorrichtung (VT) in zumindest einen Disperger (DP),
F) Zermahlen der groben Partikel (Pg) der Grobanteildispersion (Dg) im zumindest einen Disperger (DP) in ein dispergiertes Partikelgemisch (PDm) und Zurückleiten des dispergierten Partikelgemisches (PDm) in den zumindest einen Mischtank (Tm) in den Vordispersionsprozess sowie
G) Vermischen des in den Vordispersionsprozess zurückgeleiteten dispergierten Partikelgemisches (PDm) mit der im Vordispersionsprozess hergestellten Mischdispersion (Dm) in dem zumindest einen Mischtank (Tm).

2. Verfahren nach Anspruch 1, **dadurch gekennzeichnet, dass** die Verfahrensschritte solange wiederholt werden, bis die Mischdispersion (Dm) im zumindest einen Mischtank (Tm) oder die Feinanteildispersion (Df) im zumindest einen Vorratstank (Tv) eine bestimmte Füllmenge überschritten hat.

3. Verfahren nach Anspruch 2, **dadurch gekennzeichnet, dass** der Verfahrensschritt A zur Herstellung der Mischdispersion (Dm) bei kontinuierlicher Herstellung intensiviert und bei diskontinuierlicher Herstellung öfters wiederholt wird, sobald die Mischdispersion (Dm) im zumindest einen Mischtank (Tm) eine bestimmte Mindestfüllmenge unterschritten hat.

4. Verfahren nach Anspruch 1, **dadurch gekennzeichnet, dass** die zu trennende Mischdispersion (Dm) eine Farbdispersion mit Anteilen von groben und feinen Farbpigmenten ist.

5. Verfahren nach einem der vorhergehenden Ansprüche, **dadurch gekennzeichnet, dass** die Partikelgrösse der groben Partikel (Pg) im Bereich von 0,5 Mikrometer bis 1000 Mikrometer liegt und die Partikelgrösse der feinen Partikel (Pf) im Bereich von 0,01 Mikrometer bis 100 Mikrometer.

6. Verfahren nach einem der vorhergehenden Ansprüche, **dadurch gekennzeichnet, dass** durch zumindest einen Partikelfilter (FPg) sichergestellt wird, dass die Partikel des Partikelgemisches (Pm) der im Vordispersionsprozess hergestellten Mischdispersion (Dm), die eine bestimmte maximale Partikelgrösse überschreiten, nicht in die Trennvorrichtung (VT) eingeleitet werden.

7. Verfahren nach einem der vorhergehenden Ansprüche, **dadurch gekennzeichnet, dass** durch zumindest einen Partikelfilter (FPf) sichergestellt wird, dass die feinen Partikel (Pf) der Feinanteildispersion (Df), deren Partikelgrössen den Schwellenwert für die Partikelgrösse überschreiten, nicht in den Vorratstank (Tv) eingeleitet werden.

8. Verfahren nach einem der vorhergehenden Ansprüche, **dadurch gekennzeichnet, dass** ein Kreislauffluss der Dispersionen (Dm, Dg, Df, PDm) mit zumindest einer Pumpe (P) aufrechterhalten wird.

9. Verfahren nach Anspruch 8, **dadurch gekennzeichnet, dass** mittels einer Steuervorrichtung (S) Anlagenkomponenten (PD, P, FPg, FPf, VT, DP, M V, V1) ansteuerbar sowie die Strömungsgeschwindigkeiten der Dispersionen (Dm, Dg, Df, PDm) änderbar sind, entsprechend der Füllmengen im zumindest einen Mischtank (Tm) und im zumindest einen Vorratstank (Tv).

## Claims

1. A method for preparing dispersions having a defined particle size, wherein a liquid mixed dispersion (Dm) is continuously separated into a coarse content dispersion (Dg) and a fine content dispersion (Df), the method comprising the following steps:
A) continuously or discontinuously preparing the mixed dispersion (Dm) in a pre-dispersion process during which a particle mixture (Pm) of a disperse phase is mixed with a liquid continuous phase to obtain the mixed dispersion (Dm) and is intermediately stored in at least one mixing tank (Tm);
B) introducing the mixed dispersion (Dm) from the pre-dispersion process into at least one continuously operating separating device (VT);
C) separating the particle mixture (Pm) of the mixed dispersion (Dm) in the at least one separating device (VT) into coarse particles (Pg) of the coarse content dispersion (Dg) and into fine particles (Pf) of the fine content dispersion (Df), corresponding to a threshold value for the particle size;
D) discharging the fine content dispersion (Df) from the at least one separating device (VT) into at least one storage tank (Tv);
E) discharging the coarse content dispersion (Dg) from the at least one separating device (VT) into at least one disperser (DP);
F) grinding the coarse particles (Pg) of the coarse content dispersion (Dg) in the at least one disperser (DP) to obtain a dispersed particle mixture (PDm) and returning the dispersed particle mixture (PDm) into the at least one mixing tank (Tm) and into the pre-dispersion process; as well as
G) mixing the dispersed particle mixture (PDm) that was returned into the pre-dispersion process with the mixed dispersion (Dm) in the at least one mixing tank (Tm) that has been prepared during the pre-dispersion process.

2. The method in accordance with Claim 1, **characterised in that** the method steps are repeated until the mixed dispersion (Dm) in the at least one mixing tank (Tm) or the fine content dispersion (Df) in the at least one storage tank (Tv) has exceeded a specific fill volume.

3. The method in accordance with Claim 2, **characterised in that** method step A for preparing the mixed dispersion (Dm) is intensified if the preparation is continuous or is repeated several times if the preparation is discontinuous, as soon as the mixed dispersion (Dm) in the at least one mixing tank (Tm) has fallen below a specific minimum fill volume.

4. The method in accordance with Claim 1, **characterised in that** the mixed dispersion (Dm) to be separated is a colour dispersion with contents of coarse and fine colour pigments.

5. The method in accordance with any one of the preceding claims, **characterised in that** the particle size of the coarse particles (Pg) is within a range from 0.5 micrometres to 1000 micrometres and the particle size of the fine particles (Pf) is within a range from 0.01 micrometres to 100 micrometres.

6. The method in accordance with any one of the preceding claims, **characterised in that**, by means of at least one particle filter (FPg), it is ensured that the particles of the particle mixture (Pm) of the mixed dispersion (Dm) prepared during the pre-dispersion process, which exceed a specific maximum particle size, are not introduced into the separating device (VT).

7. The method in accordance with any one of the preceding claims, **characterised in that**, by means of at least one particle filter (FPf), it is ensured that the fine particles (Pf) of the fine content dispersion (Df) the particle sizes of which exceed the threshold value for the particle size are not introduced into the storage tank (Tv).

8. The method in accordance with any one of the preceding claims, **characterised in that** a circulation flow of the dispersions (Dm, Dg, Df, PDm) is maintained with at least one pump (P).

9. The method in accordance with Claim 8, **characterised in that**, by means of a control device (S), system components (PD, P, FPg, FPf, VT, DP, M V, V1) can be activated and the flow velocities of the dispersions (Dm, Dg, Df, PDm) can be changed according to the fill volumes in the at least one mixing tank (Tm) and in the at least one storage tank (Tv).

## Revendications

1. Procédé de fabrication de dispersions avec une taille particulaire définie, dans lequel une dispersion mixte liquide (Dm) est séparée en continu en une dispersion à proportion grossière (Dg) et en une dispersion à proportion fine (Df), qui présente les étapes suivantes :
A) fabrication continue ou discontinue de la dispersion mixte (Dm) dans un processus de dispersion préalable dans lequel un mélange particulaire (Pm) d'une phase dispersée est mélangé avec une phase liquide continue pour donner la dispersion mixte (Dm) et entreposé dans au moins un réservoir de mélange (Tm),
B) introduction de la dispersion mixte (Dm) provenant du processus de dispersion préalable dans au moins un dispositif de séparation (VT) à fonctionnement continu,
C) séparation du mélange particulaire (Pm) de la dispersion mixte (Dm) dans l'au moins un dispositif de séparation (VT) en particules grossières (Pg) de la dispersion à proportion grossière (Dg) et en fines particules (Pf) de la dispersion à proportion fine (Df) en fonction d'une valeur seuil pour la taille particulaire,
D) évacuation de la dispersion à proportion fine (Df) de l'au moins un dispositif de séparation (VT) dans au moins un réservoir de stockage (Tv),
E) évacuation de la dispersion à proportion grossière (Dg) de l'au moins un dispositif de séparation (VT) dans au moins un disperseur (DP),
F) pulvérisation des particules grossières (Pg) de la dispersion à proportion grossière (Dg) dans l'au moins un disperseur (DP) en un mélange particulaire dispersé (PDm) et renvoi du mélange particulaire dispersé (PDm) dans l'au moins un réservoir de mélange (TM) dans le processus de dispersion préalable ainsi que
G) mélange du mélange particulaire dispersé (PDm) renvoyé dans le processus de dispersion préalable avec la dispersion mixte (Dm) fabriquée dans le processus de dispersion préalable dans l'au moins un réservoir de mélange (Tm).

2. Procédé selon la revendication 1, **caractérisé en ce que** les étapes de procédé sont répétées jusqu'à ce que la dispersion mixte (Dm) dans l'au moins un réservoir de mélange (Tm) ou la dispersion à proportion fine (Df) dans l'au moins un réservoir de stockage (Tv) ait dépassé une capacité de remplissage déterminée.

3. Procédé selon la revendication 2, **caractérisé en ce que** l'étape de procédé A pour la fabrication de la dispersion mixte (Dm) est intensifiée en cas de fabrication continue et répétée plus souvent en cas de fabrication discontinue dès que la dispersion mixte (Dm) dans l'au moins un réservoir de mélange (Tm) a dépassé par le bas une capacité de remplissage minimale déterminée.

4. Procédé selon la revendication 1, **caractérisé en ce que** la dispersion mixte (Dm) à séparer est une dispersion colorée avec des proportions de pigments colorés grossiers et fins.

5. Procédé selon une des revendications précédentes, **caractérisé en ce que** la taille particulaire des particules grossières (Pg) se situe dans la région de 0,5 micromètre à 1000 micromètres et la taille particulaire des particules fines (Pf) dans la région de 0,01 micromètre à 100 micromètres.

6. Procédé selon une des revendications précédentes, **caractérisé en ce qu'**il est garanti par au moins un filtre à particules (FPg) que les particules du mélange particulaire (Pm) de la dispersion mixte (Dm) fabriquée dans le processus de dispersion préalable qui dépassent une taille particulaire maximale déterminée ne sont pas introduites dans le dispositif de séparation (VT).

7. Procédé selon une des revendications précédentes, **caractérisé en ce qu'**il est garanti par au moins un filtre à particules (FPf) que les particules fines (Pf) de la dispersion à proportion fine (Df) dont les tailles particulaires dépassent la valeur seuil pour la taille particulaire ne sont pas introduites dans le réservoir de stockage (Tv).

8. Procédé selon une des revendications précédentes, **caractérisé en ce qu'**un flux de circuit des dispersions (Dm, Dg, Df, PDm) est maintenu avec au moins une pompe (P).

9. Procédé selon la revendication 8, **caractérisé en ce que** des composants d'installation (PD, P, FPg, FPf, VT, DP, M V, V1) peuvent être commandés au moyen d'un dispositif de commande (S) ainsi que les vitesses d'écoulement des dispersions (Dm, Dg, Df, PDm) peuvent être modifiées en fonction des capacités de remplissage dans l'au moins un réservoir de mélange (Tm) et dans l'au moins un réservoir de stockage (Tv).
